# EUROPEAN PATENT SPECIFICATION

(11) **EP 1 442 091 B1**
(45) Date of publication and mention of the grant of the patent: **16.01.2008**
(21) Application number: 02784418.2
(22) Date of filing: 07.11.2002
(51) Int. Cl.: C09J 165/00, C09J 123/08

(54) **ADHESIVE FOR DIFFICULT TO BOND SUBSTRATES**
KLEBSTOFF FÜR SCHWIERIG ZU VERKLEBENDE SUBSTRATE
ADHESIF POUR DES SUBSTRATS DIFFICILES A LIER

(30) Priority: 09.11.2001 US 53497
(43) Date of publication of application: 04.08.2004
(73) Proprietor: National Starch and Chemical Investment Holding Corporation, New Castle, Delaware 19720 (US)
(72) Inventor: DROGOU, Cecile, London W5 5 JB (GB); PASQUIER, Thierry, F-01600 Miserieux (FR); SUNDE, Line, Farnham, Surrey GU9 8TZ (GB); FONTANEL, Aurélie, F-01090 Montmerle sur Saone (FR)
(74) Representative: Held, Stephan
(86) International application number: PCT/US2002/035849
(87) International publication number: WO 2003/042317

(56) References cited:
- EP-A- 0 612 824
- WO-A-98/21286

## Description

The invention relates to a hot melt adhesive. More specifically, the invention relates to the use of an adhesive for bonding together substrates characterized by low surface energy, i.e., from about 0.38 mN/cm (38 dyn/cm) down to about 0.25 mN/cm (25 dyn/cm) such as varnished or grease resistant substrates.

Hot melt adhesives are widely used for various commercial applications such as product assembly and packaging, Including cardboard case sealing and carton dosing operations. Such hot melt adhesives are applied to a substrate whilst in a molten state and subsequently cool to harden the adhesive layer.

UV and acrylic varnished or grease resistant treated boards are conventionally used in the consumer packaging applications. Varnishing, for example. Is conventionally used to improve the aesthetic appeal of the e.g., box, carton, container or the like. Substrates, such as paper, paperboard, cardboard used to make containers for the distribution and storage of food products are commonly treated with an agent that makes the paper stain or teak-proof. A stain or teak-proof barrier is required for paper that comes into contact with oily, greasy or watery food. Such treatment prevents wicking or staining that occurs on non-treated papers with high grease or high fat content products, such as for example, pet foods. Treatments that provide a barrier to moisture or air are also commonly used in the packaging industry. Fluorine-containing chemicals and copolymers, collectively referred to as fluorochemicals, have been used for a number of years to impart water, oil and grease resistance to substrates such as paper.

The presence of varnish, grease resistant coatings and the like, however, make the substrates difficult to bond together - e.g. surface energy can go down to about 0.25 mN/cm (25 dyn/cm) Treated substrates become resistant to conventional water-borne glues and hot melt adhesives applied for the purpose of bonding paper to paper closures. In order to solve these gluing issues, packaging converters must produce unvamished or untreated areas on UV and acrylic varnished boards or boards treated for grease resistance. Considerable costs are incurred in terms of production efficiency (e.g., setting time of the printing machine, removal of the blanks, drying hours and storage space), as well as increased packaging costs to the Industrial user.

Paper to paper bonding with good shear, peel and tearing properties of such containers is of considerable industrial importance and consequently there is a great deal of work done In this area of technology. For example, U.S. Patent No. 3,313,218 describes a method for joining waxed paperboard surfaces whereby glue is heated to an extremely high temperature before application to the waxed surface. In this method, the super-heated glue melts the wax, allowing for adhesion of the two waxed surfaces. In other prior art methods, a claycoat Is used for improvement of adhesion of grease resistant surfaces. U.S. Patent No. 4.609,571 discloses the use of a primer formulation comprising styrene/butadiene rubber to promote hot melt adhesion of fluorocarbon treated grease resistant papers.

WO 98/21286 describes a hot melt useful for packaging, comprising from about 10% to about 30% by weight of at least one copolymer of ethylene and methyl acrylate (both acrylates and methacrylates); from about 10% to about 20 % by weight of at least one copolymer of ethylene and n-butyl acrylate (both acylates and methacrylates), wherein the total polymer content does not exceed 40% by weight, and the total ethylene n-butyl acrylate copolymer content does not exceed the total ethylene methyl acrylate copolymer content by percent weight in the adhesive; from about 20% to about 60% by weight of at least one tackifying resin selected from the group consisting of rosins and modified rosins and hydrogenated derivatives; aliphatic, cycloaliphatic and aromatic hydrocarbon resins and modified hydrocarbon resins and hydrogenated derivatives; terpenes and modified terpenes and hydrogenated derivatives; and mixtures thereof; from about 5% to about 30% by weight of at least one wax; and up to about 2% by weight of an antioxidant; wherein the resultant adhesive has peel values greater than 150°F (about 65°C).

There remains a need in the art for an adhesive that may be used to bond varnished substrates together without having to leave uncoated area at the bonding site or otherwise treating the bonding site to aid bonding. The current invention addresses this need.

The invention relates to the use of an adhesive for bonding together low surface energy substrates, in particular varnished or grease resistant substrates.

The Invention provides an Improved process for bonding substrates having a surface energy less than about 0.38 mN/cm (38 dyn/cm) and down to about 0.25 mN/cm (25 dyn/cm). The process comprises bonding a first substrate to a second substrate with a hot melt adhesive, said composition comprising an ethylene n-butyl acrylate copolymer and a modified terpene tackifier. Preferred modified terpenes for use in the practice of the invention are terpene phenolics. The adhesive compositions of the invention will also preferably comprise a wax.

In one embodiment the low surface energy substrate is a UV varnish treated paperboard. In another embodiment the low surface energy substrate is a grease resistance treated paperboard. In accordance with the invention, the area of the substrate at the bonding site may be prepared In

the same manner as the rest of the substrate since the treated surface has very good glueabililty when using the adhesive In accordance with the invention.

Another aspect of the invention is directed to a method of sealing and/or making or forming a case, a carton, a tray, a box or a bag, wherein the case, carton, tray, box or bag Is treated with an agent rendering the substrate hard to bond, e.g., varnished or fluorochemical treated. This method comprises using a hot melt adhesive comprising an ethylene n-butyl acrylate copolymer and a modified terpene tackifier.

Still another aspect of the invention is directed to an article of manufacture comprising varnished or otherwise treated substrates, which treatment renders the surfaces to be bonded with a low surface energy said article being bonded together with a hot melt adhesive comprising an ethylene n-butyl acrylate copolymer and a modified terpene. In one embodiment the article of manufacture is a carton, case, tray or bag used for packaging products. In a preferred embodiment, the substrates to be bonded together to form the article comprise cardboard or paperboard.

Yet another aspect of the invention is directed to packaged articles contained within a carton, case, tray or bag, In particular packaged food, wherein the carton, case, tray or bag comprises an adhesive containing an ethylene n-butyl acrylate copolymer and a modified terpene, said substrate having been subjected to a treatment rendering the surfaces to be bonded with a low surface energy.

Another aspect of the invention is directed to a process for bonding a substrate to a similar or dissimilar substrate comprising applying to at least one substrate a molten hot melt adhesive composition and bonding said substrates together with a hot melt adhesive comprising an ethylene n-butyl acrylate copolymer and a modified terpene tackifier, wherein at least one substrate to be bonded has been treated with an agent rendering the substrate with a low surface energy.

### DETAILED DESCRIPTION OF THE INVENTION

It has been discovered that hot melt packaging adhesive compositions comprising an ethylene n-butyl acrylate copolymer and a terpene phenolic tackifier can advantageously be used to bond together substrates that have been treated in way heretofore believed to render such surfaces resistant to adhesion with conventional hot melt adhesives. The adhesive comprises at least one ethylene n-butyl acrylate copolymer, and may comprise a blend of two or more polymers.

Adhesives for use in the practice of the invention will typically comprise 35 to 45% by weight of an ethylene n-butyl acrylate copolymer. The ethylene n-butyl acrylate copolymers (EnBA) for use in the practice of the invention preferably containing from about 30 to 40% by weight n-butyl acrylate. Such copolymers are available from U.S.I. Chemical under the designation EA80808, EA89821 or EA89822 and contain approximately 35% n-butyl acrylate by weight. Such copolymers are also commercially available from ATOFINA.

Preferred adhesives for use in the practice of the invention comprise at least one ethylene n-butyl acrylate copolymer. Included are adhesives comprising ethylene n-butyl acrylate and at least one additional polymer. The at least one additional polymer is desirably also an ethylene copolymer, but other types of polymers may also be used. The additional polymers include, but are not limited to, ethylene vinyl acetate, ethylene methyl acrylate, ethylene-ethyl acrylate, ethylene acrylic acid copolymers, ethylene-acrylic ester-maleic anhydride terpolymer, polyethylene, polypropylene, poly(butene-1-co-ethylene) polymers and low molecular weight and/or low melt index ethylene n-butyl acrylate copolymers. When such additional polymer is present, it is present in amounts of up to about 25 weight percent, usually from about 5 to about 25 weight percent, preferably up to about 20 weight percent and most preferable from about 2 weight percent up to about 15 weight percent by weight of the adhesive composition.

Particularly preferred adhesives comprise an ethylene n-butyl acrylate copolymer containing up to about 45% by weight, typically 15 to 35% of n-butyl acrylate and has a melt index of at least about 900. Most preferably, the copolymer also comprises up to about 25% by weight of ethylene vinyl acetate. Even more preferably ethylene vinyl acetate component comprises less than about 30% vinyl acetate.

Ethylene n-butyl acrylate copolymers are available from Elf Atochem North America, Philadelphia, PA under the tradename Lotryl®, from Exxon Chemical Co. under the tradename Enable® (e.g., EN33330 which has a melt index of about 330 grams/10 minutes and an n-butyl acrylate content of about 33% by weight in the copolymer and EN33900 which has a melt index of about 900 and an n-butyl acrylate content of about 35% by weight) and from Millennium Petrochemicals under the tradename Enathene® (e.g., EA 89822 which has a melt index of about 400 grams/10 minutes and a n-butyl acrylate content of about 35% by weight in the copolymer).

Ethylene vinyl acetate copolymers are available from DuPont Chemical Co., Wilmington, DE under the tradename Elvax® (e.g., Elvax® 210 which has a melt index of 400 grams/10 minutes and a vinyl acetate content of 28% by weight in the copolymer, Elvax® 205W which has a melt index of 800 and a vinyl acetate content of about 28% by weight in the copolymer and Elvax® 410 which has a.melt index of 500 and a vinyl acetate content of about 18% by weight). Other ethylene vinyl acetate copolymers are available from Exxon Chemical Co. under the tradename Escorene® (e.g., UL 7505) and also from Millennium Petrochemicals, Rolling Meadows, IL, under the tradename Ultrathene® (e.g., UE 64904) and AT® copolymers available from AT Polymers & Film Co., Charlotte, NC (e.g., AT® 1850M), and also from ATOFINA under the tradename Evatane (e.g 28-420.

Ethylene methyl acrylate copolymers are also useful and are available from Exxon Chemical Co. under the tradename Optema® (e.g., Optema® XS 93.04 which has a melt index of about 270 grams/10 minutes and a methyl acrylate content of about 20% by weight in the copolymer), and also available from ATOFINA under the tradename Lotryl.

Other useful polymers include ethylene n-butyl acrylate carbon monoxide copolymers from DuPont under the tradename Elvaloy®, amorphous polyalphaolefin polymers from Rexene Products Co. in Dallas, TX under the tradename Rextac®, from Eastman Chemical Co. under the tradename Eastotlex®, from Creanova under the tradename Vestoplast®, and polyethylene homopolymers from Eastman Chemical Co. under the tradename Epolene®. Other useful polymers include Exact® 5008, an ethylene-butene polymer; Exxpol® SLP-0394, an ethylenepropylene polymer; Exact® 3031, an ethylene-hexene polymer all available from Exxon Chemical Co.; and Insight® SM-8400, an ethylene-octene polymer available from Dow Chemical Co. Midland, MI. Ethylene methyl acrylate polymers containing from about 10 to about 28 weight % by weight methyl acrylate and ethylene acrylic acid copolymers having acid numbers of 25 to 150 may also be used in the practice of the invention.

The tackifying resins useful in the adhesive compositions are the terpene phenolic resins, i.e., phenolic modified terpene resins and hydrogenated derivatives thereof such, for example, as the resin product resulting from the condensation, in an acidic medium, of a bicyclic terpene and a phenol. Representative commercial resins include Piccofin T 125 from Hercules, Sylvares TP 2040 from Arizona Chemical Co. and PRL-300 from Reichold, Sylvares TP 2040 HM from Arizona.

Terpene phenolics (made from terpenes and phenols) are used in the practice of the invention. A phenolic compound has at least one hydroxyl group directly bonded to an aromatic ring. The parent phenolic compound is phenol itself. Other phenolic compounds are derivatives of phenol wherein 1 to 3 of the aromatic hydrogens are replaced with an equal number of substituents independently selected from hydroxyl; C₁-C₁₂ alkyl; C₁-C₁₂ alkyl substituted with 1 or 2 groups selected from hydroxyl and phenyl; phenyl; and phenyl substituted with 1 or 2 groups selected from hydroxyl and C₁-C₁₂ alkyl. Specific derivatives of phenol include cresols (including the ortho, meta and para cresols), 1,3,5-xylenols, C₁₋₂₂ alkylphenol, iso-propylphenol, tert-butylphenol, amylphenol, octylphenol, nonylphenol, diphenylolpropane, phenylphenol, resorcinol, cashew nutshell liquid, bisphenol-A and cumylphenol. Phenolic compounds having a single substituent in the para position (relative to the hydroxyl group) include p-tert-butylphenol, p-octylphenol and p-nonylphenol. Hydrogenated derivatives of phenolic modified terpene resins, for example, may be prepared from the condensation, in an acidic medium, of a bicyclic terpene and a phenol are also useful.

Copolymers and terpolymers of natured terpenes, including, for example, styrene/terpene and alpha methyl styrene; polyterpene resins having a softening point, as determined by ASTM method E28-58T, of from about 80°C to 150°C; aliphatic petroleum hydrocarbon resins having a Ball and Ring softening point of from about 70°C to 135°C; aromatic petroleum hydrocarbon resins and the hydrogenated derivatives thereof; and alicyclic petroleum hydrocarbon resins and the hydrogenated derivatives thereof may be used in combination with terpene phenolic resins. Mixtures of two or more of the above described tackifying resins are contemplated for some formulations.

Modified terpene tackifiers which may be used in the practice of the invention are commercially available and include, but are not limited to Sylvares TP2040, Sylvares TP7042, available from Arizona Chemical Company. Sylvares TP2040 is a terpene phenolic tackifying resin having a R&B softening point of 123° C. Sylvares TP7042 is a terpene phenolic tackifying resin having a R&B softening point of 145° C.

The tackifying resins are typically utilized in amounts of 35-55% by weight of the adhesive composition.

The hot melt adhesives used in the practice of the invention also preferably comprise a wax. The wax used herein is preferably a high melting (above about 100°C) synthetic wax such as synthetic, high density, low molecular weight polyethylene waxes or "Fischer-Tropsch" wax. Suitable waxes include Paraflint H-1 wax, and preferably Bareco C-4040, a low molecular weight polyethylene wax from Petrolite. Modified waxes, such as vinyl acetate modified and maleic anhydride modified waxes may also be used.

The paraffin waxes useful herein are those having a ring and ball softening point of about 55°C to about 85°C. Preferred paraffin waxes are Okerin® 236 H available from Astor Wax Corporation, Doraville, GA.; Paraffin Ter Hell 6805 from Schumann-Sasol Co., Penreco® 4913 available from Pennzoil Products Co., Houston, TX.; R-7152 Paraffin Wax available from Moore & Munger, Shelton, CN.; and Paraffin Wax 1297 available from International Waxes, Ltd. in Ontario, Canada. Particularly preferred are paraffin waxes having melting points in the range of about 52 to 74°C, such as, for example, Pacemaker available from Citgo, and R-2540 available from Moore and Munger; and low melting point synthetic Fischer-Tropsch waxes having a melting point of less than about 82°C. The most preferred wax is paraffin wax with a melting point of 65°C. Other paraffinic waxes include waxes available from CP Hall under the product designations 1230, 1236, 1240, 1245, 1246, 1255, 1260, & 1262. CP Hall 1246 paraffinic wax is available from CP Hall (Stow, Ohio).

The microcrystalline waxes useful here are those having 50 percent by weight or more cyclo or branched alkanes with a length of between 30 and 100 carbons. They are generally less crystalline than paraffin and polyethylene waxes, and have melting points of greater than about 70°C. Examples include Victory® Amber Wax, a 70°C melting point wax available from Petrolite Corp. located in Tulsa, OK.; Bareco® ES-796 Amber Wax, a 70°C melt point wax available from Bareco in Chicago, IL.; Okerin® 177, an 80°C melt point wax available from Astor Wax Corp.; Besquare® 175 and 195 Amber Waxes 80°C and 90°C melt point microcrystalline waxes both available from Petrolite Corp. in Tulsa, OK.; Indramic® 91, a 90°C melt point wax available from Industrial Raw Materials located in Smethport, PA.; and Petrowax® 9508 Light, a 90°C melt point wax available from Petrowax PA, Inc. located in New York, N.Y.

Exemplary high density low molecular weight polyethylene waxes falling within this category include ethylene homopolymers available from Petrolite, Inc. (Tulsa, Okla.) as Polywax^{™} 500, Polywax^{™} 1500 and Polywak^{™} 2000. Polywax^{™} 2000 has a molecular weight of approximately 2000, an Mw/Mn of approximately 1.0, a density at 16°C of about 0.97 g/cm³, and a melting point of approximately 126°C.

The wax component is utilized at levels of greater than about 10 weight percent, typically about 20 to 40 weight percent, by weight of the adhesive.

The adhesives of the invention preferably also contain a stabilizer or antioxidant. The adhesives of the present invention preferably also contain a stabilizer or antioxidant. These compounds are added to protect the adhesive from degradation caused by reaction with oxygen induced by such things as heat, light, or residual catalyst from the raw materials such as the tackifying resin. Among the applicable stabilizers or antioxidants included herein are high molecular weight hindered phenols and multifunctional phenols such as sulfur and phosphorous-containing phenol. Hindered phenols are well known to those skilled in the art and may be characterized as phenolic compounds that also contain sterically bulky radicals in close proximity to the phenolic hydroxyl group thereof, in particular, tertiary butyl groups generally are substituted onto the benzene ring in at least one of the ortho positions relative to the phenolic hydroxy group. The presence of these sterically bulky substituted radicals in the vicinity of the hydroxyl group serves to retard its stretching frequency, and correspondingly, its reactivity; this steric hindrance thus providing the phenolic compound with its stabilizing properties. Representative hindered phenols include; 1,3,5-trimethyl 2,4,6-tris(3,5-di-tert-butyl-4-hydroxybenzyl)benzene; pentaerythrityl tetrakis-3(3,5-di-tert-butyl-4-hydroxyphenyl)propionate; n-octadecyl-3(3,5-di-tert-butyl-4.-hydroxyphenyl)-propionate; 4,4'-methylenebis(2,6-tert-butylphenol); 4,4'-thiobis(6-tert-butyl-o-cresol); 2,6-di-tertbutylphenol; 6-(4-hydroxyphenoxy)-2,4-bis(n-octyl-thio)-1,3,5triazine; di-n-octylthio)ethyl 3,5-di-tert-butyl-4-hydroxy-benzoate; and sorbitol hexa[3-(3,5-di-tert-butyl-4-hydroxyphenyl)-propionate].

The performance of these antioxidants may be further enhanced by utilizing, in conjunction therewith, known synergists such as, for example, thiodipropionate esters and phosphite. Particularly useful is distearylthiodipropionate. These stabilizers, if used, are generally present in amounts of up to about 3% by weight, more typically from about 0.1 to 1.5 weight percent, preferably 0.25 to 1.0%.

Antioxidants which may be used in the practice of the invention are commercially available from Ciba-Geigy, Hawthorne, NY and include Irganox® 565, 1010 and 1076 which are hindered phenols. These are primary antioxidants that act as radical scavengers and may be used alone or in combination with other antioxidants such as phosphite antioxidants like Irgafos® 168 available from Ciba-Geigy. Phosphite catalysts are considered secondary catalysts and are not generally used alone. These are primarily used as peroxide decomposers. Other available catalysts are Cyanox® LTDP available from Cytec Industries in Stamford, CN., and Ethanox® 1330 available from Albemarle Corp. in Baton Rouge, LA. Many such antioxidants are available either to be used alone or in combination with other such antioxidants. These compounds are added to the hot melts in small amounts and have no effect on other physical properties. Other compounds that could be added that also do not affect physical properties are pigments which add color, or fluorescing agents, to mention only a couple. Additives like these are known to those skilled in the art.

Various plasticizing or extending oils may also by present in the composition in amounts of 5% to about 30%, preferably 5 to 25%, by weight in order to provide wetting action and/or viscosity control. Even higher levels may be used in cases where block copolymer containing hydrogenated mid-block are employed as the adhesive base polymer. The above broadly includes not only the usual plasticizing oils but also contemplates the use of olefin oligomers and low molecular weight polymers as well as vegetable and animal oil and their derivatives. The petroleum derived oils which may be employed are relatively high boiling materials containing only a minor proportion of aromatic hydrocarbons (preferably less than 30% and, more particularly, less than 15% by weight of the oil). Alternatively, the oil may be totally non-aromatic. The oligomers may be polypropylenes, polybutenes, hydrogenated polyisoprene, hydrogenated polybutadiene, or the like having average molecular weights between about 350 and about 10,000. Vegetable and animal oils include glycerol esters of the usual fatty acids and polymerization products thereof.

Depending on the contemplated end uses of the adhesives, other additives such as plasticizers, pigments and dyestuffs conventionally added to hot melt adhesives may be included. In addition, small amounts of additional tackifiers and/or waxes such as microcrystalline waxes, hydrogenated castor oil and vinyl acetate modified synthetic waxes may also be incorporated in minor amounts, i.e., up to about 10 weight percent by weight, into the formulations of the present invention.

The hot melt adhesives may be prepared using techniques known in the art. Typically, the adhesive compositions are prepared by blending the components in the melt at a temperature of about 100° to 200°C until a homogeneous blend is obtained, after approximately two hours. Various methods of blending are known and any method that produces a homogeneous blend is satisfactory.

The hot melt adhesives of the invention find use in packaging, converting, bookbinding, bag ending and in the nonwovens markets. The adhesives find particular use as case, carton, and tray forming, and as sealing adhesives in the packaging of food products. Encompassed by the invention are containers, e.g., cartons, cases, boxes, bags, trays and the like.

The substrates to be bonded include virgin and recycled kraft, high and low density kraft, chipboard and various types of treated and coated kraft and chipboard. These substrates are either UV or acrylic varnished or grease treated. Composite materials are also used for packaging applications such as for the packaging of alcoholic beverages. These composite materials may include chipboard laminated to an aluminum foil which is further laminated to film materials such as polyethylene, mylar, polypropylene, polyvinylidene chloride, ethylene vinyl acetate and various other types of films. Additional, these film materials also may be bonded directly to chipboard or kraft. The aforementioned substrates by no means represent an exhaustive list, as a tremendous variety of substrates, especially composite materials, find utility in the packaging industry.

Suitable substrate sheet materials are preferably porous, and therefore not impervious to water and oil, and may vary widely. These include substrates comprised of non-woven and woven polymers such as fabrics, porous clays such as clay baking containers, metal oxide aerogels, and cellulose-based materials, such as paper and cardboard substrates, and the like. One preferred embodiment of the present invention comprises a porous sheet material made of a cellulose material, or a cellulose-based material, such as paper or paper-like materials. Such paper sheet materials include, for example, corrugated paperboard (or "cardboard"), newsprint paper, uncorrugated Kraft paper stock, pan liner paper stock, and the like. In addition to paper and paper-like materials, other cellulose-based sheet materials, such as pressed board, may also be suitable. It is also possible to use other fibrous materials for the substrate sheet material. In significant part, the choice of substrate will depend on economic concerns-low cost substrates being preferred in this regard--and the intended use of the coated sheet material. For strength and stability, as well as low cost compared to other materials, an 18 point virgin hardwood Kraft liner board is a preferred substrate.

Hot melt adhesives for packaging are generally extruded in bead form onto a substrate using piston pump or gear pump extrusion equipment. Hot melt application equipment is evailable from several suppliers including Nordson, ITW, Valco, Robatec and Inatec. Wheel applicators are also commonly used for applying hot melt adhesives, but are used less frequently than extrusion equipment.

Disposable paper containers, trays, bowls, airline meal containers and cafeteria containers, are commonly produced by pressing flat paperboard blanks Into the desired shape between appropriately shaped and heated forming dies. Various protective coatings are typically applied to the blanks before forming to make the resulting paperboard containers moisture-resistant, grease-resistant, more readily printable, etc. For purpose of exemplification the following protective coatings are mentioned Scotchban, Foraperie and UV and acrylic varnishes.

The invention can be illustrated by the following non-limiting examples.

### EXAMPLES

### Test procedures:

### Melt viscosity:

Melt viscosities of the hot melt adhesives were determined on a Brookfield Model RVT Thermosel viscometer using a number 27 spindle.

### Preparation of test samples:

Test specimens for determining elevated temperature peel and shear strengths were prepared as follows: an adhesive bead 2mm wide was applied at 180°C to a strip of 222.4/N (50 pound) Kraft paper 2.54cm (1 Inch) wide by 7.62 cm (3 inches) long across the width of the paper. A second piece of Kraft paper of the same dimensions was immediately placed over the first piece and 220 gram weight placed on top of the composite construction. The compressed adhesive bead width was 2.54 cm (1 inch).

### Determination of peel and shear

Elevated temperature peel and elevated temperature shear were determined by attaching a 100 gram weight to each specimen and placing the specimens in a forced-draft oven. The temperature was raised In 5.0°C increments from 35°C. The specimens remained at a given temperature for 15 minutes for conditioning. The heating cycle was run until the final bond failed. Each peel and shear specimen was prepared and tested in duplicate. The elevated peel and shear value shown Is the average temperature of failure for the two bonds.

### Adhesion:

Adhesion at 40°C, room temperature (22°C). 4.0°C, -16.0°C. and -35.0°C, where applicable, was determined by applying a 2mm wide bead of adhesive at 180°C to a 5.08 cm (2 inch) by 7.62 cm (3 inch)plece of paperboard and Immediately bringing a second piece of board with fibers direction In the opposite direction into contact. A 220 gram weight was immediately placed on the construction. The bonded specimens were placed in an oven at 40°C room temperature (22°C) and freezers at 4.0°C. 16.0°C, and -35.0°C. The bonds were separated by hand and a determination made as to the type of failure. Level of Fiber tearing (FT) and non-fiber tearing bonds (NFT) were noted.

### Set time:

The adhesive set time was determined in the following manner using 222.41 N (50 pound) Kraft paper and an adhesive tester that simulates a case sealing line: Kraft samples 5.08 cm (2 inches) by 15.24 cm (8 inches) were placed in the grips of the tester. The bottom specimen was moved forward at a constant speed under the melt nozzle applicator for the application of the adhesive bead and was stopped directly under the top specimen. The vertical cylinder pressure was preset at 2.9 kPa (20 psi)and, after a predetermined open time, moved the top specimen downward to contact the lower specimen. Contact was maintained for a given compression time and force after which the top substrate was separated from the lower substrate by reversal of the air flow operating the vertical cylinder. The adhesive bead width was adjusted by nitrogen pressure to give a width of 50mm following compression. Several tests were carried out under the following conditions: Open time 1 sec, Vertical Cylinder Pressure 2.9 kPa (20 psi) The shortest time required to obtain 70% of the adhesive bonds having immediate fiber tearing bonds was reported as set time.

### Stability:

The thermal stability of the adhesive blends was determined in the following manner: 50 grams of adhesive was placed in a clean 100ml, glass jar and covered with aluminum foil. The jars were then placed in forced-draft ovens at 180°C or other relevant temperatures and aged for 24, 48, and 72 hours. After these time intervals the specimen was analyzed for color change and presence of char and non-thermoplastic material (skin or gel) and the viscosity measured. Unusual behavior such as separation and lack of clarity were also noted.

### Substrates:

Substrates used were UV varnished boards. The surface energy was measured using a video contact angle instrument. The two reference liquids which were dispensed onto the substrates were water and methylene iodine and equilibrium contact angles of each liquid on substrates were measured. Based on these contact angles measurements, total surface energy was then determined using the geometric mean.

### Example 1

Adhesive Samples A-D were prepared and tested for adhesive properties. The compositions of these formulations and test results are shown in Table 1.

**Table 1**

| | Sample A | Sample B | Sample C | Sample D |
|---|---|---|---|---|
| Evatane 40-55 | 34 | | | |
| Sylvares TP 2040 HM | 29.8 | 29.8 | 49.8 | |
| Ter Hell 6805 | 36 | 35 | 20 | |
| Astorw8x 9508 | | | | 17 |
| Irganox 1010 | 0.2 | 0.2 | 0.2 | 0.5 |
| Sylvalite RE 115 | | | | 47.5 |
| Enable 33-800 | | | | 25 |
| Lotryl 35 BA 40 | | | 10 | |
| Lotryl 35 BA 320 | | 35 | 20 | 10 |
| Adhesion on UV treated | | | | |
| paperboard, 32 dyn/cm | | | | |
| -16°C | No fiber tear | 70% fiber tear | 100% fiber tear | No fiber tear |
| +4°C | No fiber tear | 100% fiber tear | 100% fiber tear | No fiber tear |
| Room temperature | No fiber tear | 100% fiber tear | 100% fiber tear | No fiber tear |
| Adhesion on UV treated | | | | |
| paperboard, 27 dyn/cm | | | | |
| -16°C | No fiber tear | 0% fiber tear | 80% fiber tear | No fiber tear |
| +4°C | No fiber tear | 100% fiber tear | 100% fiber tear | No fiber tear |
| Room temperature | No fiber tear | 100% fiber tear | 100% fiber tear | No fiber tear |
| Grease treated boards, kit>11 | | | | |
| +4°C | No fiber tear | 90% fiber tear | 100% fiber tear | No fiber tear |
| Room temperature | No fiber tear | 100% fiber tear | 100% fiber tear | No fiber tear |
| Set speed | 5 sec | 2.6-3.0 sec | 5.0 sec | 2.0-2.5 sec |
| Open time | 16 sec | 15 sec | 18 sec | 14 sec |
| Cleavage | 60°C | 60°C | 65°C | 60°C |
| Viscosity @ 180°C | 1.44 Pa.s (1440 cps ) | 0.57 Pa.s (570 cps) | 1.10 Pa.s (1100 cps ) | 0.65 Pa.s (650 cps) |
| After 72 hours at 180°C | | | | |
| Ring | Slight | Very slight | Very slight | Slight |
| Gel | None | None | None | None |
| Skin | None | None | None | None |
| colour | Dark amber | Dark amber | Dark amber | Yellow + |

This example shows the improvement of ethylene n-butyl acrylate combined with terpene phenolics (Samples B and C) over ethylene vinyl acetate based formulations combined with terpene phenolics (Sample A) and the use of ethylene n-butyt acrylate not combined with terpene phenolics (Sample D).

### Example 2

Following the procedure and testing methods described above, additional adhesive formulations (Samples E and F) were prepared to balance set time proposes and adhesion whilst maintaining good adhesion. The compositions of these formulations and test results are shown in Table 2.

**Table 2**

| | Sample E | Sample F |
|---|---|---|
| Sylvares TP 2040 HM | 29.8 | 28.8 |
| Ter Hell 6805 | 35 | 30 |
| Irganox 1010 | 0.2 | 02 |
| Lotryl 35 BA 40 | | 8 |
| Lotryl 35 BA 320 | 35 | 25.2 |
| Kristelex F85 | | 9.8 |
| Adhesion on UV treated paperboard, 32 dyn/cm | | |
| -16°C | 10% fiber tear | 100% fiber tear |
| +4°C | 100% fiber tear | 100% fiber tear |
| Room temperature | 100% fiber tear | 100% fiber tear |
| Adhesion on UV treated paperboard, 27 dyn/cm | | |
| -16°C | No fiber tear | 5% fiber tear |
| +4°C | 100% fiber tear | 100% fiber tear |
| Room temperature | 100% fiber tear | 100% fiber tear |
| Set speed | 2.5-3.0 sec | 2.5-3.0 |
| Open time | 15 sec | 18 sec |
| Cleavage | 60°C | 60°C |
| Viscosity@ 180°C | 0.57 Pa.s (570cps) | 0.60 Pa.s (600 cps) |
| After 72 hours AT 180°C | | |
| Ring | Very slight | Slight |
| Gel | None | None |
| Skin | None | None |
| Color | Dark amber | Amber |

## Claims

1. An improved process for banding low surface energy substrates, substrates are **characterized in** having a surface energy of from 0.38 mN/cm (38 dyn/cm) down to 0.25 mN/cm (25 dyn/cm), comprising bonding a first substrate to a second substrate with a hot melt adhesive composition, said composition comprising, an ethylene n-butyt acrylate copolymer and a modified terpene tackifier.

2. The process of claim 1 wherein the modified terpene is a terpene phenolic.

3. The process of claim 1 further comprising a wax.

4. The process of claim 1 wherein the substrate to be bonded is a UV varnish treated substrate or an acrylic varnish treated substrate.

5. The process of claim 4 wherein the substrate to be bonded is made of paper or paperboard.

6. The process of claim 1 wherein the substrate to be bonded is a grease resistance treated substrate.

7. The process of claim 6 wherein the substrate to be bonded is a fluorochemical treated substrate.

8. The process of claim 7 wherein the substrate to be bonded is made of paper or paperboard.

9. A method of making and/or forming a container at least one surface of which has been treated with an agent that lowers the surface energy of the substrate to be bonded, said method comprising bonding a first substrate of said container to a second substrate of the container with a hot melt adhesive composition, said composition comprising an ethylene n-butyl acrylate copolymer and a modified terpene tackifier,

10. The method of claim 9 wherein the adhesive further comprises a wax.

11. The method of claim 9 wherein the surface to be bonded is a UV varnish treated surface or an acrylic varnish treated surface.

12. The method of claim 9 wherein the surface to be bonded is a grease resistance treated substrate.

13. The method of claim 9 wherein the container is a case, a carton, a tray or a bag,

14. A container prepared with the method of claim 9.

15. The container of claim 14 wherein the adhesive further comprises a wax.

16. The container of claim 14 wherein the surface to be bonded is a UV varnished treated surface or an acrylic varnish treated surface.

17. The container of claim 14 wherein the surface to be bonded is a grease resistance treated substrate.

18. The container of claim 14 wherein the container is a case, a carton, a tray or a bag.

19. A packaged article contained in the container of claim 14.

20. The container of claim 19 wherein the surface to be bonded is a UV varnish treated surface or an acrylic varnish treated surface or a grease resistance treated substrate.

## Patentansprüche

1. Verbessertes Verfahren zum Verkleben von Substraten mit geringer Oberflächenenergie, wobei die Substrate durch eine Oberflächenenergie von 0,38 mN/cm (38 dyn/cm) bis 0,25 mN/cm (25 ,dyn/cm) charakterisiert sind, beinhaltend das Verkleben eines ersten Substrats mit einem zweiten Substrat mit Hilfe einer Heißschmelzklebstoffmischung, bei der die Mischung ein Ethylen-n-butylacrylat-Copolymer und einen modifizierten Terpenklebrigmacher umfasst.

2. Verfahren nach Anspruch 1, **dadurch gekennzeichnet, dass** das modifizierte Terpen ein phenolisches Terpen ist.

3. Verfahren nach Anspruch 1, das zusätzlich ein Wachs umfasst.

4. Verfahren nach Anspruch 1, **dadurch gekennzeichnet, dass** das zu verklebende Substrat ein mit UV-Lack behandeltes Substrat oder ein mit Acryllack behandeltes Substrat ist.

5. Verfahren nach Anspruch 4, **dadurch gekennzeichnet, dass** das zu verklebende Substrat aus Papier oder Pappe hergestellt ist.

6. Verfahren nach Anspruch 1, **dadurch gekennzeichnet, dass** das zu verklebende Substrat ein mit einem fettabweisenden Mittel behandeltes Substrat ist.

7. Verfahren nach Anspruch 6, **dadurch gekennzeichnet, dass** das zu verklebende Substrat ein fluorochemisch behandeltes Substrat ist.

8. Verfahren nach Anspruch 7, **dadurch gekennzeichnet, dass** das zu verklebende Substrat aus Papier oder Pappe hergestellt ist.

9. Verfahren zur Herstellung und/oder Gestaltung eines Behälters, bei dem zumindest eine Oberfläche mit einem Mittel, das die Oberflächenenergie des zu verklebenden Substrats absenkt, behandelt wurde, **dadurch gekennzeichnet, dass** das Verfahren die Verklebung eines ersten Substrats des genannten Behälters mit einem zweiten Substrat des Behälters mit Hilfe einer Heißklebstoffmischung umfasst, wobei die Mischung ein Ethylen-n-butylacrylat-Copolymer und einen modifizierten Terpenklebrigmacher umfasst.

10. Verfahren nach Anspruch 9, **dadurch gekennzeichnet, dass** der Klebstoff zusätzlich ein Wachs beinhaltet.

11. Verfahren nach Anspruch 9, **dadurch gekennzeichnet, dass** die zu verklebende Oberfläche eine mit UV-Lack behandelte Oberfläche oder eine mit Acryllack behandelte Oberfläche ist.

12. Verfahren nach Anspruch 9, **dadurch gekennzeichnet, dass** die zu verklebende Oberfläche ein mit einem fettabweisenden Mittel behandeltes Substrat ist.

13. Verfahren nach Anspruch 9, **dadurch gekennzeichnet, dass** der Behälter ein Kasten, ein Karton, eine Platte oder eine Tasche ist.

14. Behälter, der mit Hilfe des Verfahrens nach Anspruch 9 hergestellt wurde.

15. Behälter nach Anspruch 14, **dadurch gekennzeichnet, dass** der Klebstoff zusätzlich ein Wachs umfasst.

16. Behälter nach Anspruch 14, **dadurch gekennzeichnet, dass** die zu verklebende Oberfläche eine mit einem UV-Lack behandelte Oberfläche oder eine mit einem Acryllack behandelte Oberfläche ist.

17. Behälter nach Anspruch 14, **dadurch gekennzeichnet, dass** die zu verklebende Oberfläche eine mit einem fettabweisenden Mittel behandelte Oberfläche ist.

18. Behälter nach Anspruch 14, **dadurch gekennzeichnet, dass** der Behälter ein Kasten, ein Karton, eine Platte oder eine Tasche ist.

19. Ein verpackter Gegenstand, der in dem Behälter nach Anspruch 14 enthalten ist.

20. Behälter nach Anspruch 19, **dadurch gekennzeichnet, dass** die zu verklebende Oberfläche eine mit einem UV-Lack behandelte Oberfläche oder eine mit einem Acryllack behandelte Oberfläche oder ein mit einem fettabweisenden Mittel behandeltes Substrat ist.

## Revendications

1. Procédé perfectionné pour lier des substrats à faible énergie superficielle, substrats qui sont **caractérisés par** une énergie superficielle de 0,38 mN/cm (38 dyn/cm) à 0,25 mN/cm (25 dyn/cm), comprenant la liaison d'un premier substrat à un second substrat avec une composition d'adhésif thermofusible, ladite composition comprenant un copolymère éthylène-acrylate de n-butyle et un agent d'adhésivité à base de terpène modifié.

2. Procédé suivant la revendication 1, dans lequel le terpène modifié est une résine phénolique terpénique.

3. Procédé suivant la revendication 1, comprenant en outre une cire.

4. Procédé suivant la revendication 1, dans lequel le substrat à lier est un substrat traité avec un vernis UV ou un substrat traité avec un vernis acrylique.

5. Procédé suivant la revendication 4, dans lequel le substrat à lier est constitué de papier ou de carton.

6. Procédé suivant la revendication 1, dans lequel le substrat à lier est un substrat traité pour conférer une résistance aux graisses.

7. Procédé suivant la revendication 6, dans lequel le substrat à lier est un substrat traité avec un agent fluorochimique.

8. Procédé suivant la revendication 7, dans lequel le substrat à lier est constitué de papier ou de carton.

9. Procédé pour produire et/ou former un récipient dont au moins une surface a été traitée avec un agent qui diminue l'énergie superficielle du substrat à lier, ledit procédé comprenant la liaison d'un premier substrat dudit récipient à un second substrat du récipient avec une composition d'adhésif thermofusible, ladite composition comprenant un copolymère éthylène-acrylate de n-butyle et un agent d'adhésivité à base de terpène modifié.

10. Procédé suivant la revendication 9, dans lequel l'adhésif comprend en outre une cire.

11. Procédé suivant la revendication 9, dans lequel la surface à lier est une surface traitée avec un vernis UV ou une surface traitée avec un vernis acrylique.

12. Procédé suivant la revendication 9, dans lequel la surface à lier est un substrat traité pour conférer une résistance aux graisses.

13. Procédé, suivant la revendication 9, dans lequel le récipient est une caisse, un carton, un bac ou un sac.

14. Récipient préparé par le procédé de la revendication 9.

15. Récipient suivant la revendication . 14, dans lequel l'adhésif comprend en outre une cire.

16. Récipient suivant la revendication 14, dans lequel la surface à lier est une surface traitée avec un vernis UV ou une surface traitée avec un vernis acrylique.

17. Récipient suivant la revendication 14, dans lequel la surface à lier est un substrat traité pour conférer une résistance aux graisses.

18. Récipient suivant la revendication 14, ledit récipient étant une caisse, un carton, un bac ou un sac.

19. Article emballé présent dans le récipient de la revendication-14.

20. Récipient suivant la revendication 19, dans lequel la surface à lier est une surface traitée avec un vernis UV.ou une surface traitée avec un vernis acrylique ou un substrat traité pour conférer une résistance aux graisses.
